# EUROPÄISCHE PATENTSCHRIFT

(11) **EP 2 269 846 B1**
(45) Veröffentlichungstag und Bekanntmachung des Hinweises auf die Patenterteilung: **15.02.2012**
(21) Anmeldenummer: 10006320.5
(22) Anmeldetag: 18.06.2010
(51) Int. Cl.: B60G 7/00, B60G 17/015, B62D 17/00

(54) **Vorrichtung zum Verstellen von Sturz und/oder Spur**
Device for adjusting camber and/or toe-in / toe-out
Dispositif de réglage du carrosage et/ou de l'alignement

(30) Priorität: 01.07.2009 DE 102009031344
(43) Veröffentlichungstag der Anmeldung: 05.01.2011
(73) Patentinhaber: Audi AG, 85045 Ingolstadt (DE)
(72) Erfinder: Michel, Wilfried, 93339 Riedenburg (DE); Meitinger, Karl-Heinz, 81667 München (DE); Kossira, Christoph, 85053 Ingolstadt (DE); Müller, Hugo, 86701 Rohrenfels-Ballersdorf (DE); Schmid, Wolfgang, 85354 Freising (DE)
(74) Vertreter: Asch, Konrad

(56) Entgegenhaltungen:
- DE-A1- 3 928 135
- DE-A1-102004 049 296
- DE-A1-102008 011 367
- DE-C1- 4 317 150

## Beschreibung

Die Erfindung betrifft eine Vorrichtung zum Verstellen von Sturz und/oder Spur der Räder einer Radaufhängung, insbesondere für Kraftfahrzeuge, gemäß dem Oberbegriff des Patentanspruches 1.

Bei einer gattungsgemäßen Radaufhängung wie aus DE-10 2008 0 11 367 A1 bekannt, werden die den Sturz und/oder die Spur der Räder bestimmenden Drehteile eines Stellglieds über Stelltriebe (zum Beispiel einem Stirnzahnradtrieb) und Elektromotoren in beiden Drehrichtungen gegensinnig oder gleichsinnig verstellt. Es muss aber sichergestellt sein, dass Reaktionsmomente aus den dynamisch und statisch auftretenden Radlasten keine unbeabsichtigte Verstellung bewirken können.

Derartige Reaktionsmomente werden von den Drehteilen des Stellglieds über eine Getriebestufe bis zu einem Antriebsmotor übertragen. Das heißt, dass vom Antriebsmotor ständig ein Gegenmoment (während des Betriebes teilweise mit wechselnden Richtungen) aufgebracht werden muss, um die eingestellte Sollstellung der beiden Drehteile aufrecht zu erhalten. Sofern die eingestellte Sollstellung der Drehteile auch im abgestellten Zustand des Fahrzeuges aufrechterhalten soll, müsste selbst in diesem Fall ein Gegenmoment aufgebracht werden, das heißt der Antriebsmotor müsste mit Halteenergie beaufschlagt werden.

Aufgabe der Erfindung ist es, eine Vorrichtung der gattungsgemäßen Art zu schaffen, die bei baulich und fertigungstechnisch günstiger Konstruktion zuverlässig die statischen und dynamischen Radlasten abstützt.

Diese Aufgabe wird erfindungsgemäß mit den Merkmalen des Patentanspruches 1 gelöst. Vorteilhafte Weiterbildungen der Erfindung beschreiben die Unteransprüche.

Erfindungsgemäß ist in dem Antriebsweg zwischen der Antriebseinheit dem zumindest einen Drehteil oder Stellelement ein Sperrelement geschaltet. Das Sperrelement kann in eine Freigabestellung und in eine Sperrstellung geschaltet werden, wodurch eine Momentenübertragung entlang des Antriebswegs zwischen der Antriebsdreheinheit und dem Stellelement bedarfsweise freigeschaltet oder gesperrt werden kann. So ist erfindungsgemäß in der Freigabestellung des Sperrelements eine Übertragung des Antriebsmoments zum Stellelement ermöglicht, während das Sperrelement in der Sperrstellung ein Bremsmoment erzeugt, das einem, vom Stellelement kommenden Reaktionsmoment entgegenwirkt.

Das Sperrelement ist derart ausgelegt, dass ein Antriebsmoment ohne Weiteres zum Stellelement geleitet werden kann. Bei Aufbau eines in Gegenrichtung wirkenden Reaktionsmomentes ausgehend vom Stellelement in Richtung der Antriebsdreheinheit geht das Sperrelement jedoch in eine Sperrstellung über, in der das Sperrelement dem Reaktionsmoment mit einem Bremsmoment entgegenwirkt.

Auf diese Weise kann die Antriebsdreheinheit vollkommen von Reaktionsmomenten entlastet werden. Bevorzugt kann das vom Sperrelement erzeugte Bremsmoment bei entgegengesetzter Drehrichtung und das Reaktionsmoment gleich groß sein, wodurch die Antriebsdreheinheit im Ruhezustand momentenfrei ist.

Das Sperrelement kann beispielhaft als ein selbsthemmendes Getriebe realisiert sein. Derartige Getriebe (zum Beispiel ein Schneckentrieb) sind allerdings fertigungstechnisch aufwändig und unter Berücksichtigung des zur Verfügung stehenden Bauraumes oftmals nicht anwendbar.

Demgegenüber ist es bevorzugt, das Sperrelement als eine doppelt wirkende Schlingfederbremse auszubilden, die bei einem Antriebsmoment der Drehantriebseinheit öffnet und bei einem entgegengesetzt gerichteten Reaktionsmoment schließt.

Die Schlingfeder kann sich dabei reibschlüssig um ein ortsfestes Teil entweder dieses einschnürend zuziehen oder in kinematischer Umkehrung innerhalb dieses Teiles aufweiten. Neben der baulich einfachen Gestaltung wirkt die Schlingfederbremse dauerhaft, ohne Steuerungsaufwand und ist unabhängig von jeglicher Energiezuführung von Außen.

Die Schlingfederbremse kann in beide Drehrichtungen wirken. Das heißt, dass jedes Reaktionsmoment, gleichgültig in welche Richtung es die Antriebseinheit beaufschlagt, gebremst wird, in dem sich die Schlingfeder an eine Zylinderwand anlegt und somit eine Drehung verhindert. Die Schlingfederbremse selbst kann je nach Bauart beziehungsweise Platzverhältnissen so ausgeführt sein, dass sich die Schlingfeder zum Bremsen entweder an eine Zylinderinnenwand anlegt oder aber auch einen Zylindermantel einschnürt.

Im Vergleich zu anderen, gleichwirkenden Sperrsystemen ist für das Ansteuern der Schlingfederbremse keine elektronische Steuerungslogik erforderlich. Entsprechend benötigt auch kein elektrisches Betätigungselement, zum Beispiel ein Hubmagnet für die Bremsbetätigung. Elektrische Energie zum Aktivieren oder Freigeben der Schlingfederbremse bei abgestelltem Fahrzeug ist ebenfalls nicht erforderlich.

Durch die Auflaufwirkung der Schlingfeder kommt es bei Beaufschlagung mit einem Reaktionsmoment zu einem Selbstverstärkungseffekt, bei dem das Bremsmoment bei steigendem Reaktionsmoment ebenfalls ansteigt, wobei es jedoch nicht zu einem Festsetzen der Schlingfederbremse kommt, wie es bei Stiften, Klinken, Rasten oder ähnlichem der Fall ist. Außerdem zeichnet sich die Schlingfederbremse im Verhältnis zur bereitstellbaren Bremskraft durch sehr geringes Baugewicht aus, wobei die Schlingfederbremse insgesamt aus wenigen, sehr einfachen Bauteilen ausgeführt werden kann. Sämtliche Reaktionsmomente können somit abgeblockt werden.

In bevorzugter Weiterbildung kann das Gehäuse an das Gehäuse des Elektromotors angebaut sein, wobei die Schlingfederbremse axial innerhalb eines die Antriebswelle lagemden, dem Antriebszahnrad benachbarten Wälzlagers angeordnet ist. Dies stellt eine robuste Drehlagerung des Antriebszahnrades und eine fertigungstechnisch einfache Einbindung der Schlingfederbremse in den Stelltrieb sicher. Die Schlingfederbremse könnte jedoch auch unmittelbar in das Gehäuse des Elektromotors integriert sein.

In bevorzugter Ausbildung der Erfindung kann die Antriebswelle im Bereich der Schlingfeder unterteilt sein und ein Offnerteil und ein Schließerteil tragen, die unter Belassung eines Umfangsspieles in beiden Drehrichtungen formschlüssig ineinander greifen, wobei die Schlingfeder mit von ihren Windungen radial abragenden Armen jeweils zwischen das Öffnerteil und das Schließerteil einragt und entsprechend betätigt wird.

Des Weiteren kann die Schlingfeder in einer deren Außenumfang umschließenden, gehäusefesten Hülse angeordnet sein, in die das Schließerteil und das Öffnerteil einragen und mit den radial nach innen ragenden Armen der Schlingfeder zusammenwirken. Daraus resultiert eine axial besonders kurz bauende Konstruktion, bei der die Schlingfeder, das Schließerteil und das Öffnerteil im Wesentlichen in einer gemeinsamen Radialebene positioniert sind.

Ferner kann das Schließerteil auf dem einen Abschnitt der Antriebswelle zwei radial nach außen abragende Mitnehmer aufweise, die in Ausnehmungen einer an dem anderen Abschnitt der Antriebswelle befestigten Mitnehmerhülse einragen. Damit ist in einfacher Weise eine in Umfangsrichtung formschlüssige Verbindung der unterteilten Antriebswelle geschaffen, wobei das Umfangsspiel gezielt auf die Antriebsverhältnisse abstimmbar ist.

Dazu kann des Weiteren die Schlingfeder mit Vorspannung reibschlüssig in der Hülse angeordnet sein. Zudem kann die Schlingfeder zumindest durch zwei umlaufende Windungen, bevorzugt aber durch mehr als zwei Windungen gebildet sein. Durch die geometrische Ausbildung und die Anzahl der Windungen kann die Schlingfeder in einfacher Weise gezielt auf die auftretenden Belastungen und Momente eingestellt werden.

Ferner kann die Schlingfeder zur Vergrößerung der Bremskräfte und aufzunehmenden Reaktionsmomente im Querschnitt quadratisch oder rechteckförmig mit etwa planen, zylindermantelförmigen Reibflächen ausgeführt sein.

Schließlich kann zur Schaffung einer fertigungstechnisch günstigen und einfachen Vormontageeinheit der das Antriebszahnrad und das Schließerteil tragende Abschnitt der Antriebswelle und der das Öffnerteil tragende Abschnitt der Antriebswelle innerhalb des Gehäuses und einer Adapterplatte angeordnet sein, die mit dem Gehäuse des Elektromotors und über eine Steckverbindung mit der Antriebswelle des Elektromotors verbindbar sind.

Ein Ausführungsbeispiel der Erfindung ist im Folgenden mit weiteren Einzelheiten näher erläutert.

Die schematische Zeichnung zeigt in:
- Fig. 1: eine Radaufhängung für Kraftfahrzeuge mit einem mehrteiligen, an Radführungselementen angelenkten Radträger, dessen Rad über zwei verdrehbare Stellzylinder verstellbar ist, wobei die Stellzylinder jeweils mittels eines Stelltriebes und eines Elektromotors verdreh- bar sind;
- Fig. 2: den Radträger der Fig. 1 mit dem lenkerseitigen Führungsteil, das einen Elektromotor trägt, wobei zwischen dem Elektromotor und dem Antriebszahnrad des Stelltriebes eine Schlingfederbremse angeordnet ist;
- Fig. 3: das Gehäuse und die Schlingfederbremse in einem Längsschnitt entlang der Antriebswelle;
- Fig. 4: das Gehäuse und die Schlingfederbremse nach Fig. 3 in einer Explosionsdarstellung der Funktionsteile;
- Fig. 5: einen Querschnitt im Bereich des Schließerteils und des Offnerteils der Schlingfederbremse bei einem Reaktionsmoment aus statischer oder dynamischer Radlast mit wirksamer Schlingfeder; und
- Fig. 6: den gleichen Querschnitt gemäß Fig. 5 bei einem Antriebsmoment über den Elektromotor und geöffneter, nicht wirksamer Schling- feder.

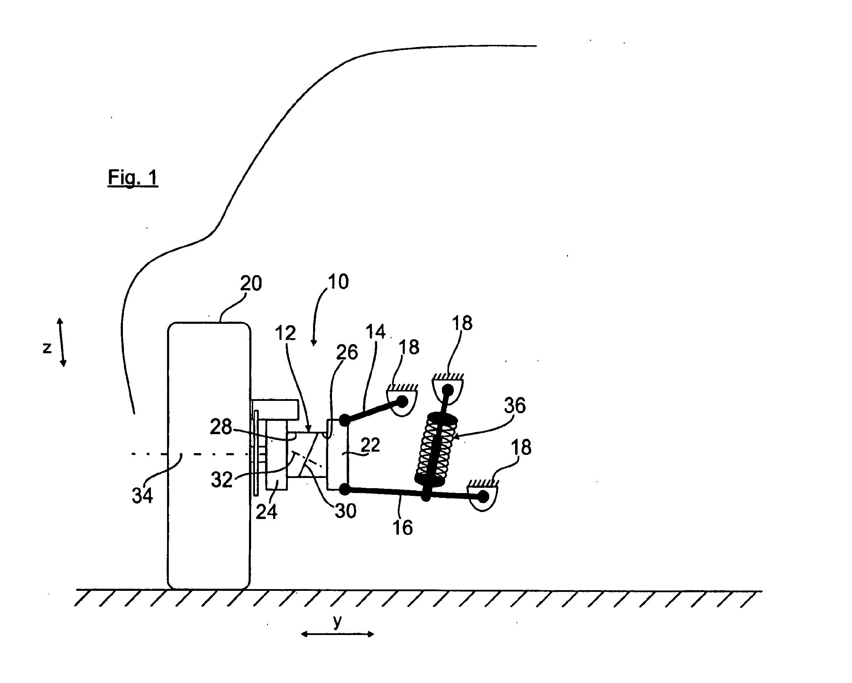

In der **Fig. 1** ist eine Radaufhängung 10 für Kraftfahrzeuge grob schematisch dargestellt, bei der ein Radträger 12 über Querlenker 14, 16 als Radführungselemente an einem nur angedeuteten Aufbau 18 angelenkt ist.

Der das Rad 20 drehbar aufnehmende Radträger 12 ist unterteilt in ein an den Querlenkern 14, 16 angelenktes Führungsteil 22, ein das Rad 20 über ein entsprechendes Radlager (nicht dargestellt) aufnehmendes Trägerteil 24 und in zwei verdrehbar am Führungsteil 22 und am Trägerteil 24 gelagerte Drehteile 26, 28, die über eine senkrecht zu einander zugewandten Schrägflächen 30 verlaufende Drehachse 32 verstellbar sind. Ein Verdrehen eines oder beider Drehteile 26, 28 bewirkt ein Verkippen des Trägerteils 24 relativ zur Raddrehachse 34 und dementsprechend ein Verstellen der Spur und/oder Sturz des Rades 20 der Radaufhängung 10. Die Radlast ist in bekannter Weise über eine Tragfeder beziehungsweise das Federbein 36 gegenüber dem Aufbau 18 abgestützt.

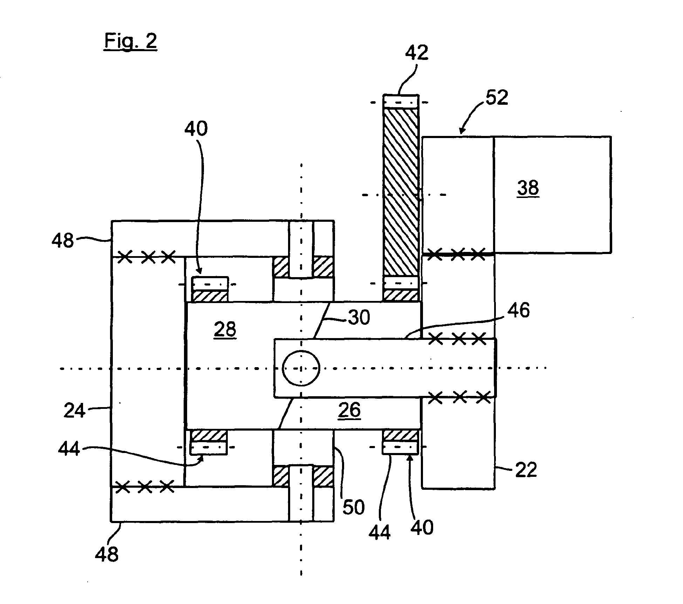

In der **Fig. 2** ist die Betätigung der Drehteile 26, 28 zur Spur- und Sturzeinstellung des Rades 20 näher dargestellt. Dazu ist je Drehteil 26, 28 ein Elektromotor 38 (es ist nur der Elektromotor 38 des Führungsteils 22 ersichtlich) vorgesehen, der an dem Führungsteil 22 beziehungsweise an dem Trägerteil 24 befestigt ist. Die Elektromotore 38 treiben über Stirnzahnradtriebe 40 beziehungsweise über ein Antriebszahnrad 42 und ein an den Drehteilen 26, 28 befestigtes Zahnrad 44 die Drehteile 26, 28 in beiden Drehrichtungen verstellbar an. Ein an Auslegern 46, 48 kardanisch verschwenkbarer Kardanring 50 ist zur Momentenabstützung des Trägerteiles 24 relativ zum Führungsteil 22 vorgesehen.

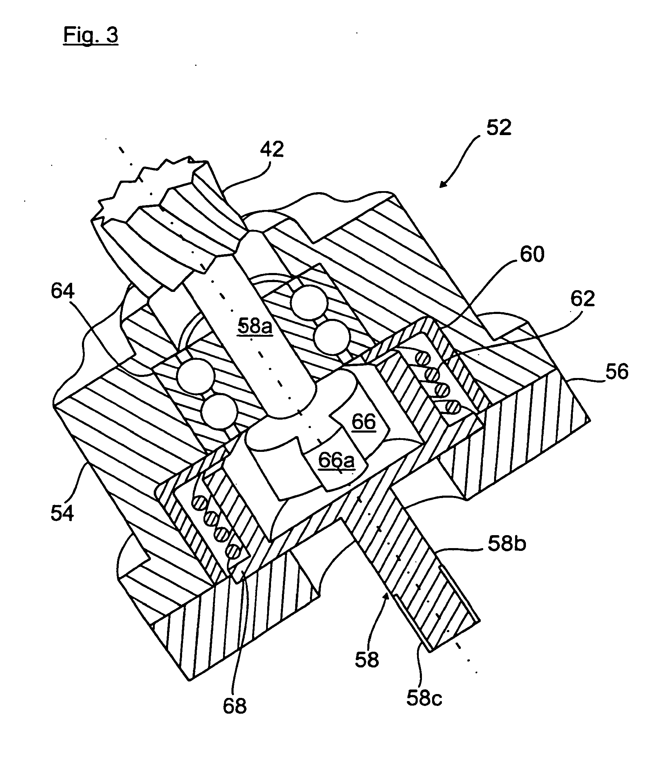

Zwischen die Elektromotore 38 und deren Antriebszahnräder 42 ist jeweils eine Schlingfederbremse 52 eingeschaltet (in Fig. 2 nur angedeutet), die in den weiteren **Fig. 3 bis 6** in der konstruktiven Ausführung dargestellt ist. Die Schlingfederbremse 52 ermöglicht einen unbehinderten Antrieb der Drehteile 26, 28 in beide Drehrichtungen, stützt aber ein aus der statischen und/oder dynamischen Radlast entstehendes Reaktionsmoment ab.

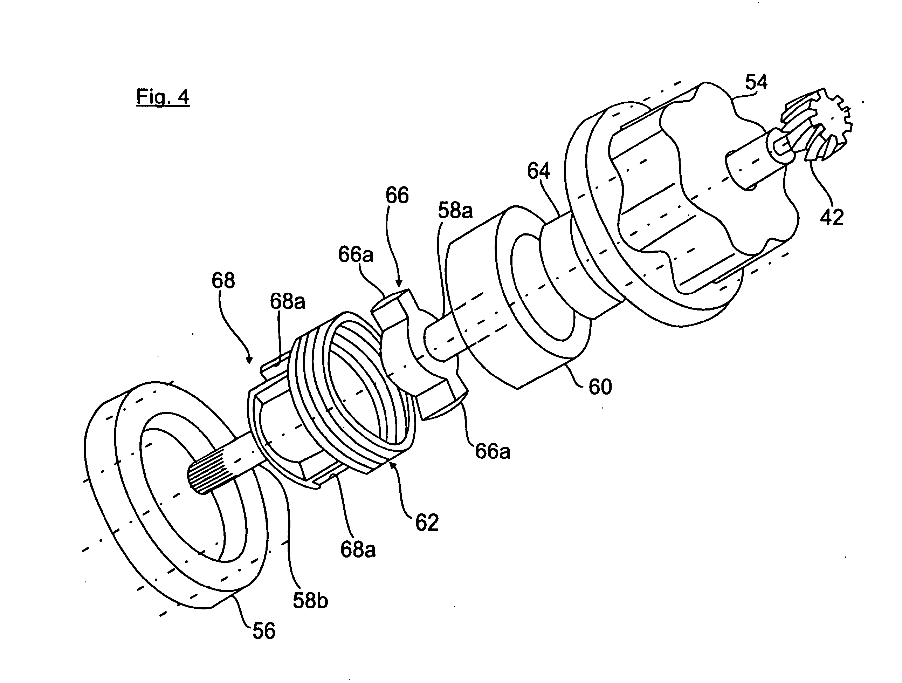

Die **Fig. 3** **und** **4** zeigen zunächst die Einzelteile der Schlingfederbremse 52, die aus einem äußeren Gehäuse 54 mit einer die Gehäuseöffnung einerseits abschließenden Adapterplatte 56, einer in zwei Abschnitte 58a, 58b unterteilten Antriebswelle 58, einer in das Gehäuse 54 fest eingesetzten, tassenförmigen Hülse 60 und einer in der Hülse 60 angeordneten, sich aus mehreren Windungen zusammensetzenden Schlingfeder 62 aus Federstahl zusammensetzt. Die Antriebswelle 58 erstreckt sich durch das Gehäuse 54 mit Adapterplatte 56 und trägt einerseits das Antriebszahnrad 42 des Stirnzahnradtriebes 40 und andererseits eine kerbverzahnte Steckverbindung 58c, mittels der die Antriebswelle 58 mit der nicht dargestellten Antriebswelle des Elektromotors 38 trieblich verbindbar ist, wobei zugleich das Gehäuse 54 über die Adapterplatte 56 mit dem Gehäuse des Elektromotors 38 verschraubt ist.

Der Abschnitt 58a der Antriebswelle 58 ist über ein zweireihiges Wälzlager beziehungsweise Kugellager 64 im Gehäuse 54 drehbar gelagert und trägt daran anschließend ein Schließerteil 66, das zwei radial und diametral nach außen ragende Mitnehmer 66a aufweist.

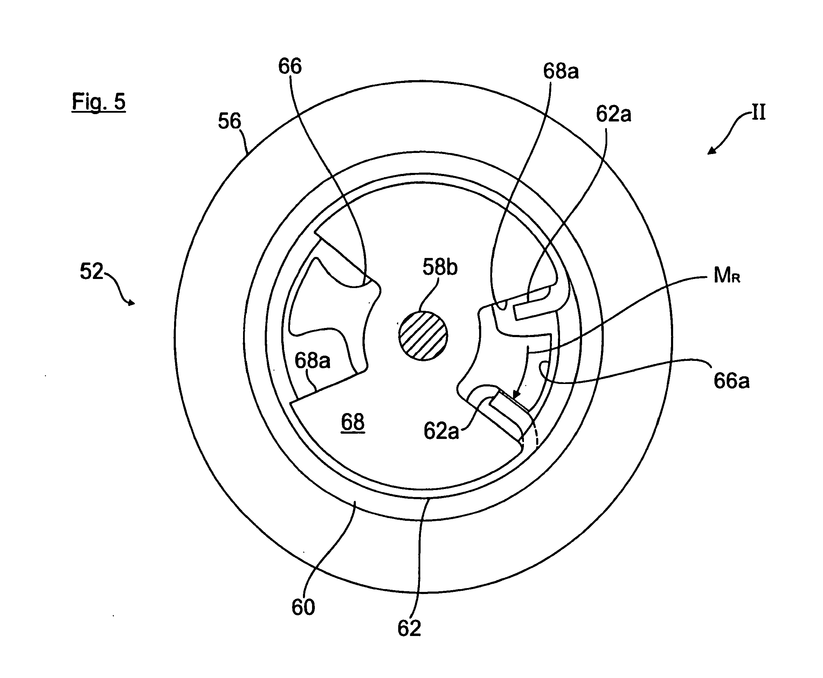

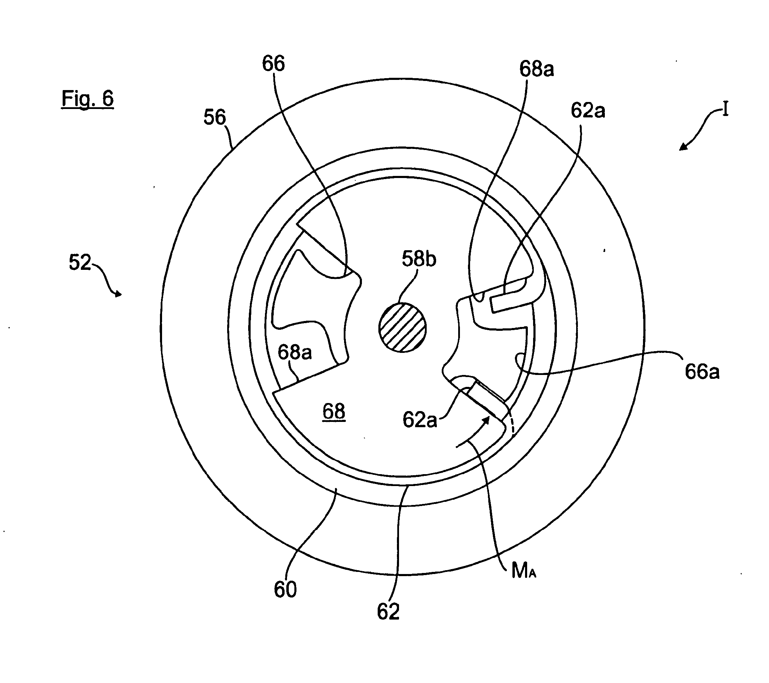

Die Mitnehmer 66a des Schließerteils 66 ragen in korrespondierende Ausnehmungen 68a eines büchsenförmigen Öffnerteiles 68 ein, das an dem zweiten Abschnitt 58b der Antriebswelle 58 ausgebildet ist. Zwischen den Mitnehmem 66a des Schließerteiles 66 und den Ausnehmungen 68a des Offnerteiles 68 ist jeweils ein definiertes Umfangsspiel vorgesehen (vgl. **Fig. 5** **und** **6**).

Die in einer Radialebene mit dem Schließerteil 66 und dem Öffnerteil. 68 innerhalb der Hülse 60 angeordnete Schlingfeder 62 weist gemäß den **Fig. 5** **und** **6** an ihren Windungsenden zwei radial nach innen ragende Arme 62a auf, die beiderseits der Mitnehmer 66a des Schließerteils 66 in die Ausnehmungen 68a des Öffnerteils 68 einragen. In einer Mittelstellung des Schließerteils 66 und des Öffnerteils 68 bei nicht betätigter Schlingfeder 62 sitzt diese mit leichtem Reibschluss innerhalb der Hülse 60 (zum Beispiel in der Montagestellung).

Wird für eine Verstellung der Drehteile 26, 28 der Elektromotor 38 bestromt, so treibt dieser in der einen oder der anderen Drehrichtung die Antriebswelle 58 der doppeltwirkenden Schlingfederbremse 52 an.

Dabei wird von der Antriebsdreheinheit 38 ein Abtriebsmoment M_{A} in die Schlingfederbremse 52 eingeleitet, die in eine, in der **Fig. 6** gezeigte Freigabestellung 1 übergeht, damit das Antriebsmoment M_{A} bis zum Drehteil 26 übertragen wird.

Das eingeleitete Antriebsmoment M_{A} wirkt gemäß der **Fig. 6** von dem Abschnitt 58b der Antriebswelle 58 auf das Offnerteil 68, das über die Ausnehmung 68a und den Mitnehmer 66a des Schließerteils 66 den Abschnitt 58a der Antriebswelle 58 und schließlich das Antriebszahnrad 42 antreibt. Der gemäß der **Fig. 6** in die Ausnehmung 68a des Öffnerteils 68 einragende Arm 62a der Schlingfeder 62 wird dabei mitgedreht und bewirkt ein Einschnüren beziehungsweise Zusammenziehen der Schlingfeder 62, so dass diese wirkungslos innerhalb der Hülse 60 mitdrehen kann. Es wird kein Reibmoment auf die ortsfeste Hülse 60 übertragen. Die gleiche Funktion der Schlingfeder 62 liegt bei der entgegengesetzten Drehrichtung vor, wobei dann der andere Arm 62a der Schlingfeder 62 entsprechend beaufschlagt wird.

Ist der Elektromotor 38 nicht aktiviert und überträgt dieser kein Antriebsmoment, so werden gemäß der **Fig. 5** gegebenenfalls auftretende Reaktionsmomente M_{R} aus der Radlast, die sich über die Drehteile 26, 28 und die Stirnzahnradtriebe 40 auf die Antriebswelle 58 auswirken können, durch die Schlingfeder 62 über das Gehäuse 54, 56 abgestützt.

Dabei wirkt das Reaktionsmoment M_{R} (**Fig. 5**) über das Antriebszahnrad 42, den Abschnitt 58a der Antriebswelle 58 und das Schließerteil 66 auf die Schlingfeder 62. Die Schlingfederbremse 52 geht dadurch in ihre Sperrstellung II über, in der der Mitnehmer 66a des Schließerteils 66 einen Arm 62a der Schlingfeder 62 derart belastet wird, dass diese sich aufweitet und aufgrund des dabei entstehenden Reibmomentes festgebremst ist. Die Antriebswelle 58 mit dem Schließerteil 66 kann somit innerhalb des Gehäuses 54, 56 nicht verdreht werden. Der gleiche Effekt tritt auch bei einem in entgegengesetzter Drehrichtung auftretenden Drehmoment auf.

Zur Erhöhung des übertragbaren Reibmomentes der Schlingfeder 62 innerhalb der Hülse 60 ist der Drahtquerschnitt der Wicklungen der Schlingfeder 62 quadratisch oder rechteckförmig gestaltet, so dass im Querschnitt gesehen plane Reibflächen am Innenumfang der Hülse 60 anliegen. Die Anzahl der Windungen ist je nach berechneter Belastung der Schlingfeder 62 ausgelegt und beträgt bevorzugt mehr als zwei Windungen.

## Patentansprüche

1. Vorrichtung zum Verstellen von Sturz und/oder Spur eines Fahrzeugrads (20), mit einem Radträger (12), zwischen dessen das Fahrzeugrad (20) aufnehmenden, radseitigen Trägerteil (24) und dessen mit einer Radaufhängung verbundenen, achsseitigen Führungsteil (22) zumindest ein um eine Drehachse drehbares Stellelement (26, 28) geschaltet ist, das zum Verstellen des Sturzes und/oder der Spur des Fahrzeugrads (20) mittels einer Antriebsdreheinheit (38) verstellbar ist, **dadurch gekennzeichnet, dass** in dem Antriebsweg zwischen der Antriebsdreheinheit (38) und dem Stellelement (26, 28) ein Sperrelement (52) geschaltet ist, das in einer Freigabestellung (I) den Antriebsweg für eine Übertragung eines Antriebsmoments (M_{A}) von der Antriebsdreheinheit (38) auf das Stellelement (26, 28) freischaltet, und in einer Sperrstellung (II) ein Bremsmoment erzeugt, das einem vom Stellelement (26, 28) auf die Antriebsdreheinheit (38) gerichteten Reaktionsmoment (M_{R}) entgegenwirkt.

2. Vorrichtung nach Anspruch 1, **dadurch gekennzeichnet, dass** das Sperrelement (52) eine Schlingfederbremse (52) ist, die bei einem Antriebsmoment (M_{A}) der Drehantriebseinheit (38) öffnet und bei einem Reaktionsmoment (M_{R}) des Stellelements (26, 28) schließt.

3. Vorrichtung nach Anspruch 1 oder 2, **dadurch gekennzeichnet, dass** das Sperrelement (52) dem vom Stellelement (26, 28) kommenden Reaktionsmoment (M_{R}) unabhängig von seiner Drehrichtung entgegenwirkt.

4. Vorrichtung nach Anspruch 1, 2 oder 3, **dadurch gekennzeichnet, dass** das Sperrelement (52) eine Übertragung des von der Antriebsdreheinheit (38) kommenden Antriebsmoments (M_{A}) unabhängig von seiner Drehrichtung zulässt.

5. Vorrichtung nach einem der Ansprüche 1 bis 4, **dadurch gekennzeichnet, dass** das Sperrelement (52) bei einer Drehbetätigung der Antriebsdreheinheit (38) selbsttätig in seine Freigabestellung (I) übergeht.

6. Vorrichtung nach einem der vorhergehenden Ansprüche, **dadurch gekennzeichnet, dass** das Sperrelement (52) bei Aufbau eines vom Stellelement (26, 28) in Richtung Antriebsdreheinheit (38) wirkenden Reaktionsmoments (M_{R}) in die Sperrstellung (II) übergeht.

7. Vorrichtung nach einem der vorhergehenden Ansprüche, **dadurch gekennzeichnet, dass** das vom Sperrelement (52) erzeugte Bremsmoment gleich dem, vorzugsweise größer als das Reaktionsmoment (M_{R}) des Stellelements (26, 28) ist.

8. Vorrichtung nach einem der Ansprüche 2 bis 7, **dadurch gekennzeichnet, dass** die Schlingfederbremse (52) in die Antriebswelle (58) der Drehantriebseinheit geschaltet ist.

9. Vorrichtung nach Anspruch 8, **dadurch gekennzeichnet, dass** das Gehäuse (54, 56) an das Gehäuse des Elektromotors (38) angebaut ist und dass die Schlingfederbremse (52) axial innerhalb eines die Antriebswelle (58) lagernden, dem Antriebszahnrad (42) benachbarten Wälzlagers (64) angeordnet ist.

10. Vorrichtung nach Anspruch 8 oder 9, **dadurch gekennzeichnet, dass** die Antriebswelle (58) im Bereich der Schlingfederbremse (52) in zwei Abschnitte (58a, 58b) unterteilt ist, die jeweils ein Öfinerteil (68) und ein Schließerteil (66) tragen, die unter Belassung eines Umfangsspieles in beiden Drehrichtungen formschlüssig ineinander greifen und dass eine Schlingfeder (62) mit von ihren Windungen radial abragenden Armen (62a) jeweils zwischen das Offnerteil (68) und das Schließerteil (66) einragt.

11. Vorrichtung nach Anspruch 10, **dadurch gekennzeichnet, dass** die Schlingfeder (62) in einer deren Außenumfang umschließenden, gehäusefesten Hülse (60) angeordnet ist, in die das Schließerteil (66) und das Öffnerteil (68) einragen und mit deren radial. nach innen ragenden Armen (62a) zusammenwirken.

12. Vorrichtung nach den Ansprüchen 10 und 11, **dadurch gekennzeichnet, dass** das Schließerteil (66) auf dem einen Abschnitt (58a) der Antriebswelle (58) zwei radial nach außen abragende Mitnehmer (66a) aufweist, die in Ausnehmungen (68a) des an dem anderen Abschnitt (58b) der Antriebswelle (58) befestigten, hülsenförmigen Offnerteils (68) einragen.

13. Vorrichtung nach Anspruch 11 oder 12, **dadurch gekennzeichnet, dass** die Schlingfeder (62) mit Vorspannung reibschlüssig in der Hülse (60) angeordnet ist.

14. Vorrichtung nach einem der Ansprüche 6 bis 9, **dadurch gekennzeichnet, dass** die Schlingfeder (62) zumindest durch zwei umlaufende Windungen gebildet ist.

15. Vorrichtung nach einem der Ansprüche 10 bis 13, **dadurch gekennzeichnet, dass** die Schlingfeder (62) im Querschnitt quadratisch oder rechteckförmig mit etwa planen, zylindermantelförmigen Reibflächen ausgeführt ist.

16. Vorrichtung nach einem der vorhergehenden Ansprüche 10 bis 15, **dadurch gekennzeichnet, dass** der das Antriebszahnrad (42) und das Schließerteil (66) tragende Abschnitt (58a) der Antriebswelle (58) und der das Öffnerteil (68) tragende Abschnitt (58b) der Antriebswelle (58) innerhalb des Gehäuses (54) und einer Adapterplatte (56) angeordnet sind, die mit dem Gehäuse des Elektromotors (38) und über eine Steckverbindung (58c) mit der Antriebswelle des Elektromotors (38) verbindbar sind.

17. Vorrichtung nach einem der vorhergehenden Ansprüche, **dadurch gekennzeichnet, dass** das zwischen dem Trägerteil und dem Führungsteil zwei Stellelemente geschaltet sind, die bevorzugt mit einander zugewandten, um einen definierten Winkel zur Drehachse geneigten Schrägflächen zusammenwirken, wobei die Stellelemente jeweils über eine Drehantriebseinheit in beiden Drehrichtungen verstellbar sind.

## Claims

1. Device for adjusting the camber and/or toe-in of a vehicle wheel (20), having a wheel carrier (1-2), between whose wheel-side carrier part (24) which holds the vehicle wheel (20) and whose axle-side guide part (22) which is connected to a wheel suspension at least one actuating element (26, 28), which can rotate about a rotational axis, is connected, which actuating element (26, 28) can be adjusted by means of a driving rotation unit (38) in order to adjust the camber and/or the toe-in of the vehicle wheel (20), **characterized in that** a locking element (52) is connected in the drive path between the driving rotation unit (38) and the actuating element (26, 28), which locking element (52) releases, in a release position (I), the drive path for transmission of a driving torque (M_{A}) from the driving rotation unit (38) to the actuating element (26, 28), and in a locking position (II) generates a braking torque which counteracts a reaction torque (M_{R}) which is directed from the actuating element (26, 28) to the driving rotation unit (38).

2. Device according to Claim 1, **characterized in that** the locking element (52) is a coil spring braking mechanism (52) which opens when there is driving torque (M_{A}) of the driving rotation unit (38) and closes when there is a reaction torque (M_{R}) of the actuating element (26, 28).

3. Device according to Claim 1 or 2, **characterized in that** the locking element (52) counteracts the reaction torque (M_{R}) coming from the actuating element (26, 28), irrespective of its direction of rotation.

4. Device according to Claim 1, 2 or 3, **characterized in that** the locking element (52) permits transmission of the driving torque (M_{A}) coming from the driving rotation unit (38), independently of its direction of rotation.

5. Device according to one of Claims 1 to 4, **characterized in that** the locking element (52) goes automatically into its release position (I) when rotational activation of the driving rotation unit (38) takes place.

6. Device according to one of the preceding claims, **characterized in that** the locking element (52) goes into the locked position (II) when a reaction torque (M_{R}) which acts in the direction of the driving rotation unit (38) is built up by the actuating element (26, 28).

7. Device according to one of the preceding claims, **characterized in that** the braking torque which is generated by the locking element (52) is equal to, and preferably larger than, the reaction torque (M_{R}) of the actuating element (26, 28).

8. Device according to one of Claims 2 to 7, **characterized in that** the coil spring braking mechanism (52) is connected into the drive shaft (58) of the driving rotation unit.

9. Device according to Claim 8, **characterized in that** the housing (54, 56) is attached to the housing of the electric motor (38), and **in that** the coil spring braking mechanism (52) is arranged axially within a roller bearing (64) which supports the drive shaft (58) and is adjacent to the drive gearwheel (42).

10. Device according to Claim 8 or 9, **characterized in that**, in the region of the coil spring braking mechanism (52), the drive shaft (58) is divided into two sections (58a, 58b) which each have an opening part (68) and a closing part (66) which engage one into the other in a positively locking fashion while leaving circumferential play in both directions of rotation, and **in that** a coil spring (62) projects, with arms (62a) which project radially from its turns, in each case between the opening part (68) and the closing part (66).

11. Device according to Claim 10, **characterized in that** the coil spring (62) is arranged in a sleeve (60) which surrounds the outer circumference of the latter, is fixed to the housing and into which the closing part (66) and the opening part (68) project and interact with their radially inwardly projecting arms (62a).

12. Device according to Claims 10 and 11, **characterized in that** the closing part (66) has, on the one section (58a) of the drive shaft (58), two radially outwardly projecting drivers (66a) which project into recesses (68a) in the sleeve-shaped opening part (68) which is attached to the other section (58b) of the drive shaft (58).

13. Device according to Claim 11 or 12, **characterized in that** the coil spring (62) is arranged in a frictionally locking fashion with prestress in the sleeve (60).

14. Device according to one of Claims 6 to 9, **characterized in that** the coil spring (62) is formed by at least two circumferential turns.

15. Device according to one of Claims 10 to 13, **characterized in that** the coil spring (62) is embodied in a square or rectangular cross section, with approximately planar frictional faces in the form of cylindrical lateral surfaces.

16. Device according to one of the preceding Claims 10 to 15, **characterized in that** the section (58a) of the drive shaft (58) which bears the drive gearwheel (42) and the closing part (66) and the section (58b) of the drive shaft (58) which bears the opening part (68) are arranged inside the housing (54) and an adapter plate (56) which can be connected to the housing of the electric motor (38) and to the drive shaft of the electric motor (38) via a plug-type connection (58c).

17. Device according to one of the preceding claims, **characterized in that** two actuating elements are connected between the carrier part and the guide part, which actuating elements preferably interact with oblique faces which are turned towards one another and are inclined by a defined angle with respect to the rotational axis, wherein the actuating elements can each be adjusted in both directions of rotation by means of a driving rotation unit.

## Revendications

1. Dispositif de réglage du carrossage et/ou du pincement d'une roue de véhicule (20), comprenant un support de roue (12), entre la partie de support (24) duquel, du côté de la roue, recevant la roue du véhicule (20), et la partie de guidage (22) duquel, du côté de l'essieu, connectée à une suspension de roue, est monté au moins un élément de réglage (26, 28) pouvant tourner autour d'un axe de rotation, qui peut être réglé au moyen d'une unité rotative d'entraînement (38) en vue du réglage du carrossage et/ou du pincement de la roue de véhicule (20), **caractérisé en ce que**, dans la voie d'entraînement entre l'unité rotative d'entraînement (38) et l'élément de réglage (26, 28), est monté un élément de verrouillage (52), qui, dans une position de libération (I), libère la course d'entraînement pour un transfert d'un couple d'entraînement (M_{A}) de l'unité rotative d'entraînement (38) à l'élément de réglage (26, 28), et dans une position de verrouillage (II), produit un couple de freinage qui agit à l'encontre d'un couple de réaction (M_{R}) orienté depuis l'élément de réglage (26, 28) vers l'unité rotative d'entraînement (38).

2. Dispositif selon la revendication 1, **caractérisé en ce que** l'élément de verrouillage (52) est un frein à ressort hélicoïdal (52), qui s'ouvre dans le cas d'un couple d'entraînement (M_{A}) de l'unité rotative d'entraînement (38) et qui se ferme dans le cas d'un couple de réaction (M_{R}) de l'élément de réglage (26, 28).

3. Dispositif selon la revendication 1 ou 2, **caractérisé en ce que** l'élément de verrouillage (52) agit à l'encontre du couple de réaction (M_{R}) provenant de l'élément de réglage (26, 28) indépendamment de son sens de rotation.

4. Dispositif selon la revendication 1, 2 ou 3, **caractérisé en ce que** l'élément de verrouillage (52) autorise un transfert du couple d'entraînement (M_{A}) provenant de l'unité rotative d'entraînement (38) indépendamment de son sens de rotation.

5. Dispositif selon l'une quelconque des revendications 1 à 4, **caractérisé en ce que** l'élément de verrouillage (52), dans le cas d'un actionnement en rotation de l'unité rotative d'entraînement (38), passe automatiquement dans sa position de libération (I).

6. Dispositif selon l'une quelconque des revendications précédentes, **caractérisé en ce que** l'élément de verrouillage (52), dans le cas du développement d'un couple de réaction (M_{R}) agissant depuis l'élément de réglage (26, 28) dans la direction de l'unité rotative d'entraînement (38), passe dans la position de verrouillage (II).

7. Dispositif selon l'une quelconque des revendications précédentes, **caractérisé en ce que** le couple de freinage produit par l'élément de verrouillage (52) est égal, de préférence supérieur, au couple de réaction (M_{R}) de l'élément de réglage (26, 28).

8. Dispositif selon l'une quelconque des revendications 2 à 7, **caractérisé en ce que** le frein à ressort hélicoïdal (52) est monté dans l'arbre d'entraînement (58) de l'unité rotative d'entraînement.

9. Dispositif selon la revendication 8, **caractérisé en ce que** le boîtier (54, 56) est monté sur le boîtier du moteur électrique (38), et **en ce que** le frein à ressort hélicoïdal (52) est disposé axialement à l'intérieur d'un palier à roulement (64) supportant l'arbre d'entraînement (58), adjacent à la roue dentée d'entraînement (42).

10. Dispositif selon la revendication 8 ou 9, **caractérisé en ce que** l'arbre d'entraînement (58) est divisé en deux portions (58a, 58b) dans la région du frein à ressort hélicoïdal (52), lesquelles régions portent à chaque fois une partie d'ouverture (68) et une partie de fermeture (66), qui viennent en prise l'une dans l'autre par engagement positif en laissant un jeu périphérique dans les deux sens de rotation, et **en ce qu'**un ressort hélicoïdal (62) pénètre avec des bras (62a) saillant radialement depuis ses enroulements à chaque fois entre la partie d'ouverture (68) et la partie de fermeture (66).

11. Dispositif selon la revendication 10, **caractérisé en ce que** le ressort hélicoïdal (62) est disposé dans une douille (60) fixée au boîtier entourant sa périphérie extérieure, dans laquelle la partie de fermeture (66) et la partie d'ouverture (68) pénètrent et coopèrent avec ses bras (62a) saillant radialement vers l'intérieur.

12. Dispositif selon les revendications 10 et 11, **caractérisé en ce que** la partie de fermeture (66) présente, sur l'une des portions (58a) de l'arbre d'entraînement (58), deux dispositifs d'entraînement (66a) saillant radialement vers l'extérieur, qui pénètrent dans des évidements (68a) de la partie d'ouverture (68) en forme de douille fixée sur l'autre portion (58b) de l'arbre d'entraînement (58).

13. Dispositif selon la revendication 11 ou 12, **caractérisé en ce que** le ressort hélicoïdal (62) est disposé avec précontrainte et engagement par friction dans la douille (60).

14. Dispositif selon l'une quelconque des revendications 6 à 9, **caractérisé en ce que** le ressort hélicoïdal (62) est formé au moins par deux enroulements périphériques.

15. Dispositif selon l'une quelconque des revendications 10 à 13, **caractérisé en ce que** le ressort hélicoïdal (62) est réalisé en section transversale sous forme carrée ou rectangulaire, avec des surfaces de friction approximativement planes et en forme d'enveloppe cylindrique.

16. Dispositif selon l'une quelconque des revendications précédentes 10 à 15, **caractérisé en ce que** la portion (58a) de l'arbre d'entraînement (58) portant la roue dentée d'entraînement (42) et la partie de fermeture (66), et la portion (58b) de l'arbre d'entraînement (58) portant la partie d'ouverture (68) sont disposées à l'intérieur du boîtier (54) et d'une plaque d'adaptateur (56), et peuvent être connectées au boîtier du moteur électrique (38) et par le biais d'une connexion par enfichage (58c) à l'arbre d'entraînement du moteur électrique (38).

17. Dispositif selon l'une quelconque des revendications précédentes, **caractérisé en ce que** deux éléments de réglage sont montés entre la partie de support et la partie de guidage, lesquels coopèrent de préférence avec des surfaces obliques tournées l'une vers l'autre et inclinées d'un angle défini par rapport à l'axe de rotation, les éléments de réglage pouvant être déplacés à chaque fois par le biais d'une unité d'entraînement rotative dans les deux sens de rotation.
